(19) **Europäisches Patentamt European Patent Office Office européen des brevets**

(11) **EP 4 613 628 A1**

(12) **EUROPEAN PATENT APPLICATION**

(43) Date of publication:
**10.09.2025 Bulletin 2025/37**

(21) Application number: **24382247.5**

(22) Date of filing: **07.03.2024**

(51) International Patent Classification (IPC):
**B63B 3/02** *(2006.01)* **B22F 10/00** *(2021.01)*
**B33Y 10/00** *(2015.01)* **B33Y 80/00** *(2015.01)*
**B63B 73/20** *(2020.01)* **B63B 73/30** *(2020.01)*
**B63B 73/50** *(2020.01)* **B63B 73/60** *(2020.01)*
**B63B 81/00** *(2020.01)*

(52) Cooperative Patent Classification (CPC):
**B63B 73/20; B22F 5/10; B22F 7/08; B33Y 10/00;
B33Y 80/00; B63B 3/02; B63B 73/30; B63B 73/50;
B63B 73/60; B63B 81/00; B63H 23/321;**
B63H 2023/327

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Navantia, S.A., SME
28006 Madrid (ES)**

(72) Inventors:
• **BLANCO SEIJO, Carlos Manuel
15404 FERROL (ES)**

• **RAMIL VIZOSO, Aitor
15624 ARES (ES)**
• **DEIBE DÍAZ, Álvaro
15405 FERROL (ES)**
• **PÉREZ RODRÍGUEZ, José Antonio
15008 A CORUÑA (ES)**
• **CARDENAL CARRO, Jesús
15401 FERROL (ES)**

(74) Representative: **ZBM Patents - Zea, Barlocci &
Markvardsen
Rambla de Catalunya, 123
08008 Barcelona (ES)**

(54) **FAIRWATERS AND METHODS FOR PROVIDING FAIRWATERS**

(57) In one aspect, a method for providing a fairwater, is provided. The method comprises configuring the fairwater so that the fairwater comprises one or more bodies, at least one body comprising a first region and a second region, wherein a density of the first region is higher than a density of the second region. The method further comprises 3D printing the bodies of the fairwater.

In a further aspect, a fairwater comprising two or more 3D-printed bodies is provided. Each body comprises a first and a second region, wherein a density of the first region is higher than a density of the second region.

**EP 4 613 628 A1**

## Description

The present disclosure relates to fairwaters and to methods for providing fairwaters.

BACKGROUND

Marine vessels comprise a propeller shaft and a plurality of support struts along the length of the propeller shaft to ensure support of the overhung load of the propeller shaft and stability as it rotates. There may be one or more support struts along the length of the propeller shaft.

Conventional struts support bearings through which the propeller shaft passes. Therefore, the supported bearings allow the propeller shaft to rotate. A metal housing or fairwater usually encloses the bearings for protecting the bearings from hits while the marine vessel is at sea. Depending on the configuration of the support struts at the stern side, one or more fairwaters are arranged on the propeller shaft.

Fairwaters are usually made of a solid metal body, which makes the fairwater heavy and difficult to handle, requiring dry-docking of the marine vessel for repair or replacement: this involves taking the marine vessel to a suitable dry dock when such an operation is needed, with very high costs and down times. Being made of metal, fairwaters are also prone to corrosion in sea water.

Furthermore, conventional shapes of fairwaters are cylinders and portions of spheres to facilitate their handling and manufacture. Considerable shaping and welding are required in the manufacture of fairwaters. In addition, conventional shapes of fairwaters are not ideally hydrodynamic for reducing flow turbulences around the fairwater.

Examples of the present disclosure seek to reduce at least partially one or more of the aforementioned problems.

SUMMARY

In a first aspect, the present disclosure involves a method for providing a fairwater. The method comprises configuring the fairwater so that the fairwater comprises one or more bodies, at least one body comprising a first region and a second region, wherein a density of the first region is higher than a density of the second region, and 3D printing the one or more bodies of the fairwater. In the present specification, *configuring the fairwater* is intended to mean establishing, during a design step of the fairwater, its physical and technical features, such as, for example, the number of parts or bodies making up the fairwater, their materials, sizes, outer and inner shapes, assembly means, or any other.

The difference in density between a first region and a second region of a body may be implemented by the body comprising one material, e.g. a single build material used for 3D printing all the body, with a first density of the material used in the first region of the body being different from a second density of the material used in the second region of the body; or by the first region of the body comprising a first material, e.g. a first build material used for 3D printing the first region, and the second region of the body comprising a second material, e.g. a second build material used for 3D printing the second region, that is different from the first material; or the body comprising at least a cavity arranged inside the body; or the body comprising at least a weight; or combinations thereof.

The difference in density between the first region and the second region of at least one body may be obtained by at least one of: 3D-printing the body such that it has a difference in density between the regions; or modifying the density of at least one of the regions of the 3D-printed body. In other words, the bodies of the fairwater may be 3D-printed in their final configuration as established in the first step of the method, or they may be 3D-printed in an initial configuration, e.g. by way of body workpieces or blanks, and then modified or adjusted to the final body configuration in an additional step of the method. The configuration may be modified e.g. by modifying the density of at least one region of a 3D-printed body such that a density of the first region is higher than a density of the second region.

Example methods wherein the bodies are 3D-printed in their final configuration may involve, for example, 3D printing a body with an enclosed cavity or with a weight inserted between layers of build material. Example methods wherein the bodies are 3D-printed in an initial configuration and then adjusted to a final configuration may involve, for example, 3D printing a body with open cavities and selectively filling one or more open cavities with a load after 3D printing; or attaching a weight to the outer surface of the body in a region of the 3D-printed body.

Examples of the present disclosure allow configuring a fairwater with bodies of an overall external shape as convenient for the function of the fairwater of shielding the propeller shaft bearing, and/or for reducing drag, etc., and at the same time configuring each body with a suitable mass distribution, such that the body adopts a predetermined orientation when placed in sea water, making the fairwater easy to handle underwater and to install on a marine vessel.

The present disclosure uses the physical principle that a body that is placed in water, once it reaches a state of equilibrium, adopts a certain orientation. This orientation depends on the mass distribution of the body. Particularly, the body adopts the orientation in which the center of gravity of the body and the center of buoyancy of the body are vertically aligned.

This physical principle is applied in the present disclosure to configure the bodies of the fairwater, and in particular their mass distribution. When the bodies of the fairwater are released into water, and in particular into sea water, each body tilts or turns until its center of buoyancy and center of gravity are vertically aligned: by virtue of the specific mass distribution that has been given to the bodies of the fairwater, the resulting orientation is a predetermined orientation, suitable for assembling the fairwater at a target position of the marine vessel for which it was designed.

This allows providing a fairwater that can be released into sea water, and effortlessly conveyed and mounted at the target position by divers. The target position may be any position about the marine vessel. Since this operation may be carried out at sea, with no dry-docking of the marine vessel being required, the cost and the down time for the replacement of the fairwater are therefore minimum.

The mass distribution of each body of the fairwater, for achieving the desired predetermined orientation in sea water, may be configured by varying the density within each body from one region to another through a number of solutions, as explained above.

Density of an object such as a fairwater body or a region of the body is defined as:

$$\rho = \frac{m}{V}$$

where m is the mass of the body of the fairwater, or the mass of a region of the body of the fairwater; V is the total volume of the body or region, measured based on the external shape of the body or region; and $\rho$ is the density of the body or region.

For example, two regions of a body which are made of the same build material may have different densities if in one region the build material has larger pores than in another region; or if one region comprises a cavity whereas the other region does not comprise such cavity. Similarly, two bodies with the same external shape and made of the same build material may have different mass distributions if they have cavities in different regions, cavities of different size or shape, or cavities that are filled with materials of different densities (e.g. air and water). The particular solution of providing the bodies with cavities allows obtaining a lightweight fairwater, more easily transportable and / or storable, compared with a fairwater with solid bodies.

On the other hand, 3D printing the bodies of the fairwater allows configuring the bodies of the fairwater in complex shapes and having a high degree of liberty in the design of the fairwater, and also in the configuration of the mass distribution of each body. For example, cavities of any desired size and/or shape may readily be included in the bodies manufactured by 3D printing.

Furthermore, 3D printing the bodies also allows the fairwater to be provided into optimal hydrodynamic shapes. Optimal hydrodynamic shape of the fairwater may be a shape such that the turbulent flow around the fairwater is reduced (i.e., reducing the number of Reynolds Re around the fairwater). For example, the two or more bodies of the fairwater may have a semi-frustoconical shape.

In some examples, build materials for 3D printing each body of the fairwater may be selected from the following: polymers, composition of cements, metals, metals alloys, or combinations thereof. Build materials comprising polymers may be preferred in some cases, as they provide a suitable balance between weight and mechanical properties.

Depending on the build material, a suitable 3D printing method may be selected for printing each body made of the build material (e.g., stereolithography SLA, selective laser sintering SLS, fused deposition modeling FDM, digital light process DLP, multi jet fusion MJF, poly Jet, direct metal laser sintering DMLS, electron beam melting, etc.). Therefore, 3D-printed fairwaters may be made of a plurality of materials that may be e.g., corrosion resistant materials, which may reduce maintenance or repairs to be carried out over the lifecycle of the fairwater.

In the present disclosure, a build material is the material used to form successive layers of the body in the 3D printing operation.

In a further aspect of the present disclosure, a fairwater for a marine vessel is provided. The fairwater comprises one or more 3D-printed bodies, at least one body comprising a first region and a second region, wherein a density of the first region is higher than a density of the second region. The difference in density may be implemented by: each body comprising one material, with a first density of the material in the first region of the body being different from a second density of the material in the second region of the body; or the first region comprising a first material and the second region comprising a second material that is different from the first material; or each body comprising at least a cavity arranged inside the body; or the body comprising at least a weight; or combinations thereof.

By virtue of the difference in density between a first region and a second region of each body of the fairwater, mass distribution of the bodies of the fairwater is purposively designed. Adjusting the mass distribution of at least one body of the fairwater allows each body to adopt a suitable predetermined orientation when placed in sea water.

A fairwater according to the present disclosure may comprise only one 3D-printed body: for example, a body formed by two substantially symmetrical parts to surround between them the bearing and propeller shaft, and having one or more joining portions between the two parts, e.g. by way of a relatively flexible hinge along the longitudinal direction (i.e., the direction of the propeller shaft on which the fairwater is to be assembled. In some advantageous examples, fairwaters according to the present disclosure may comprise two or more 3D-printed bodies, to be assembled to each other around the propeller shaft and bearing.

In practice, the fairwater may be released into the water in the vicinity of a marine vessel that is afloat. When in water, each body adopts the predetermined orientation by virtue of the specific mass distribution that has been given to each body of the fairwater. For example, the mass distribution of each body may be configured such that the bodies adopt orientations that bring them to face each other as in a mounting condition, so they can be displaced to the target position by divers and easily assembled around the propeller shaft. Therefore, no dry-docking of the marine vessel is required for mounting the fairwater to the marine vessel.

The present disclosure also provides a method and a fairwater according to examples described herein, in which each body of the fairwater is additionally configured with a floatability that is close to neutral: for example, each body may be configured with an external volume (i.e., the total volume of the body, measured based on the external shape of the body) and with a total weight (i.e., the total weight of the body in the final configuration of the body, including any attached weights and filling loads) such that, when the body is in sea water, a buoyant force Fb acting on the body is between 80% and 120% of a gravitational force Fg acting on the body, that is:

$$0.80\ Fg \leq Fb \leq 1.20\ Fg$$

By virtue of a floatability that is close to neutral, when the bodies of the fairwater are released into the sea, it is easy to maintain them near the water surface without the need to exert high forces, and also avoiding the risk of the bodies quickly sinking. At the same time, the bodies are easily displaced in the water without the need to exert high forces, e.g. by divers, to a target position for assembly of the fairwater on the submerged hull of a marine vessel.

In examples, each fairwater body is configured such that the relationship between the buoyant force Fb and the gravitational force Fg results in that the body remains substantially at the surface, instead of having a strong tendency to sink (floatability close to neutral). The floatability is also configured for each particular fairwater body such that the force a diver needs to exert on the body for taking it from the water surface to the assembly position on the hull is within a diver's physical abilities.

Moreover, as discussed earlier, each body of the fairwater adopts the predetermined orientation it is configured for, by virtue of the different density between the first and second regions of the body.

This allows installing a fairwater about a bearing arranged on a propeller shaft of the marine vessel by a simple operation, involving divers who effortlessly convey and mount the fairwater parts at the target position of the submerged hull. A damaged fairwater may therefore be changed at sea, without the need of dry-docking of the marine vessel.

BRIEF DESCRIPTION OF THE DRAWINGS

Non-limiting examples of the present disclosure will be described in the following, with reference to the appended drawings, in which:

Figs. 1, 2, 3 and 4 schematically show block diagrams of methods for providing a fairwater according to some examples of the present disclosure; and

Figs. 5a, 5b, figs. 6a, 6b, 6c and fig. 7 schematically represent fairwaters according to some examples of the present disclosure.

DETAILED DESCRIPTION OF EXAMPLES

In the figures, the same reference signs have been used to designate the same or analogous elements.

The present disclosure is concerned with examples of fairwaters of a marine vessel, especially fairwaters with one or more 3D-printed bodies, or with two or more 3D-printed bodies, and methods for providing such fairwaters.

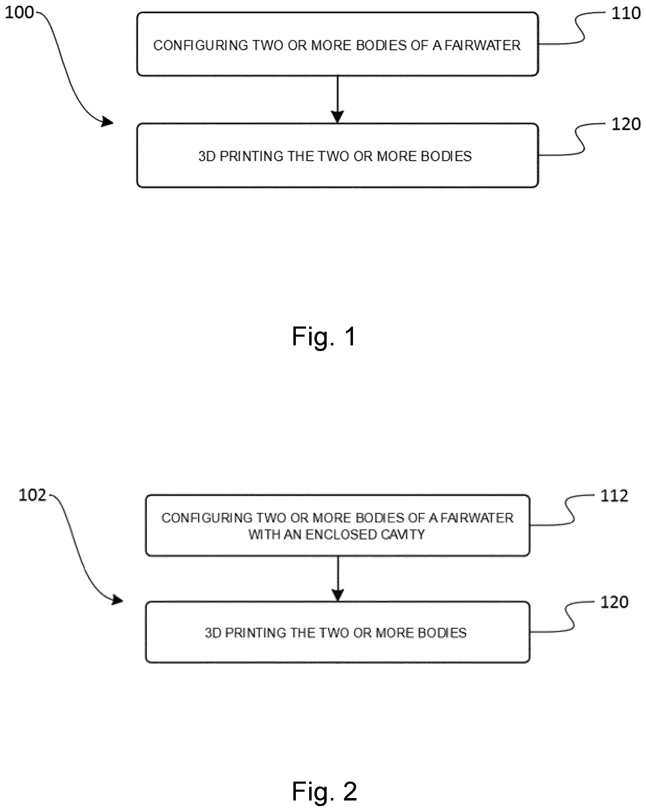

Fig. 1 schematically shows a block diagram of an example method 100 for providing a fairwater, to illustrate features of the present disclosure. The method 100 may be performed by a system for manufacturing the fairwater, the system comprising a 3D printer according to any of the examples herein disclosed.

In the example of fig. 1, the method 100 for providing the fairwater comprises configuring a fairwater at block 110.

At block 110, the fairwater is configured to comprise two or more bodies, with each body comprising a first region and a second region, in which a density of the first region is higher than a density of the second region. In examples, the outer shape of the two or more bodies may be the same.

By setting up a difference in density between the two regions of each body, considering that density is a measure of how concentrated mass is in a particular region (i.e., the amount of mass per unit volume), mass distribution (which is the spatial distribution of mass within a body) of each body may be adjusted.

In fig. 1, the difference in density may be implemented by forming the bodies with different materials in different regions (leading to regions with a higher or a lower density), e.g. with different build materials during 3D printing. Other alternative or additional solutions for adjusting the difference in density may be bodies formed by the same build material with different densities in different regions (e.g., the build material being more or less porous), or bodies including cavities (i.e., an enclosed cavity and / or an open cavity), or any combinations of the disclosed examples.

For example, some polymers for FDM 3D printing, e.g. thermoplastics in which the degree of foaming depends on the extrusion temperature, allow a continuous variation of the density of the material during the printing process. By programming the printing operation with a varying temperature, a variable degree of foaming, and therefore a density gradient, may be achieved.

In other examples, the designed fairwater may have a cavity within at least one body of the one or more bodies, or of the two or more bodies, of the fairwater. Therefore, the density of a body or region may therefore be lower than the density of its build material, i.e., if the body or region comprises cavities.

Cavities are defined as hollow spaces inside a mass of material, e.g. of the build material used in 3D printing, which are larger than the pores of the build material, e.g. at least 100 times larger than the pores of the build material. In examples, the volume of a cavity may be of at least 10 cm$^3$, or of at least 100 cm$^3$, or of at least 1000 cm$^3$.

On the other hand, the density of a body or region may be made higher than the density of the build material used for 3D printing it, by adding a weight to the body or region.

Configuring different mass distributions in different fairwater bodies may cause the fairwater bodies to adopt different predetermined orientations when they are in sea water.

At block 120, the two or more bodies of the fairwater are 3D-printed. 3D printing may be carried out by a 3D printer according to any 3D additive manufacturing process based on e.g., VAT photopolymerization, material jetting, binder jetting, material extrusion, powder bed fusion, sheet lamination, and direct Energy Deposition. Specific examples of 3D additive manufacturing process according to at least one of the above-mentioned 3D additive manufacturing processes may be e.g., stereolithography SLA, selective laser sintering SLS, fused deposition modelling FDM, digital light process DLP, multi jet fusion MJF, poly Jet, direct metal laser sintering DMLS, electron beam melting, etc.

The system for manufacturing the fairwater, which comprises a 3D printer according to any of the examples herein disclosed, further comprises a control module for controlling the 3D printer and the printing process of the designed body or bodies of the fairwater according to block 110. The remaining parts of the 3D printer may vary depending on the selected 3D additive manufacturing process.

Referring to build materials for 3D printing each body of the fairwater, the build materials may be selected from the following: polymers, composition of cements, metals, metals alloys, or combinations thereof. Depending on the build material, a suitable 3D additive manufacturing processes may be selected for printing the build material and obtaining the two or more bodies of the fairwater. Therefore, the 3D-printed bodies of the fairwater may be made of a plurality of materials that may be e.g., corrosion resistant materials, which may reduce maintenance or repairs to be carried out over the lifecycle of the fairwater.

Below, a short explanation of 3D printers according to some of aforementioned 3D additive manufacturing processes for carrying out the method 100. 3D additive manufacturing processes may be carried out by photopolymerization, material extrusion, VAT polymerization, powder bed fusion, material jetting, binder jetting, direct energy deposition, and sheet lamination.

Referring to Fused Deposition Modeling (FDM), the 3D printer may comprise an extruder, a hotend, a build plate, stepper motors, a frame, and the aforementioned control module.

The extruder melts and deposits the build material layer by layer. In FDM 3D printing, the build material may be a thermoplastic filament e.g., thermoplastic polymers such as polylactic acid PLA, acrylonitrile butadiene styrene ABS, polyethylene terephthalate glycol PETG; polymer matrix composites such as glass fiber reinforced plastic GFRP, carbon fiber reinforced polymer CFRP; ceramic slurries and clay such as alumina, zirconia, kaolin; ceramic / binder mixture such as zirconia, calcium phosphate; metal / binder structure mixture such as stainless steel, titanium, Inconel; composition of cements. The hotend heats the build material to its melting point, allowing the subsequent extrusion of the build material by the extruder. The build plate provides a surface for the 3D-printed fairwater to adhere to during printing. The stepper motors control the movement of the extruder and the build plate. The frame is a structure that supports the 3D printer parts. State of the art FDM 3D printers may be e.g., Prusa i3 MK3/MK4 from Prusa Research a.s., Ender 3/CR-10 from Shenzhen Creality 3D Technology Co., or Ultimaker 3/Ultimaker S3, from Ultimaker B.V. Large size 3D printers, well suited for producing fairwaters, and in particular fairwaters for large vessels, may be for example WASP 3MT HDP from 3D Wasp, Modix BIG-180X from Modix Modular Technologies Ltd, or WorkCenter 500 from 3D Platform.

Referring to stereolithography (SLA), the 3D printer may comprise a resin tank, a build platform, a UV light source, galvanometers / scanning mirrors, and the aforementioned control module.

The resin tank contains the build material. In SLA 3D printing, the build material may be a liquid photopolymer resin such as thermoset polymers. The build platform moves vertically to lift at least one of the two or more bodies of the fairwater out of the resin tank. Galvanometers / scanning mirrors direct the UV light source (e.g., a UV laser) to specific pinpoint areas of the resin so that the UV light source cures the resin layer by layer. The control module may be further configured to control the UV light source as well as the galvanometers / scanning mirrors for correctly performing the curing process. State of the art SLA 3D printers may be e.g., Formlabs Form 3/Form 3L, Anycubic Photon, and Elegoo Mars

Referring to digital light processing (DLP), the 3D printer may comprise the same parts than the SLA 3D printer but, a DLP 3D printer further uses a digital light projector for simultaneously curing an entire layer onto the resin.

State of the art SLA 3D printers may be e.g., Peopoly Moai, Wanhao D7, and Phrozen Sonic Mini 4K.

Referring to selective Laser Sintering (SLS), the 3D printer may comprise a powder bed, a laser, a build platform, a roller / blade, a heater, and the aforementioned control module.

The powder bed holds the building material. In SLS 3D printing, the build material may be a powder material e.g., polymers such as nylon, carbon fiber, and polybutylene terephthalate PBT; ceramics; glasses such as fused silica, borosilicate glasses; and metals. The laser fuses the powder material at specific pinpoint areas to create a layer of the build material (i.e., the laser sinters the powder material) in accordance with the geometry of the designed body of the fairwater. After each layer is sintered, the build platform is lowered. The build platform is a surface for supporting the 3D-printed fairwater during printing. The roller / blade levels the build material for the next layer to be sintered. The heater is configured to maintain the build material at a predefined temperature. The predetermined temperature depends on the build material and the printing conditions. State of the art SLS 3D printers may be e.g., Formlabs Fuse 1, Sintratec S2, and EOS P 396.

Referring to MultiJet Printing (MJP), the 3D printer may comprise a printhead, a build platform, a UV light source, and the aforementioned control module.

The printhead contains multiple jets that deposit a build material layer by layer. In MJP 3D printing, the build material may be a liquid photopolymer. After each layer is deposited, the build platform is lowered. The UV light source (e.g., a UV laser) cures each layer of the photopolymer. The control module may be configured to control the printhead for correctly performing the curing process. State of the art SLS 3D printers may be e.g., 3D Systems ProJet Series, and Stratasys Objet Series.

It may be understood that specific 3D printers may have additional features such as auto-bed leveling, enclosure, cooling systems, and touchscreen interfaces, or others.

A suitable 3D additive manufacturing process and a corresponding printer may be selected for 3D printing the two or more bodies of the fairwater, depending on the size and weight of the bodies of the fairwater to be 3D-printed, as well as the chosen build materials, densities, shapes, etc.

3D printing allows obtaining complex shapes of the one or more bodies of the fairwater, without manufacturing tradeoffs unlike conventional manufacturing (e.g., welding pieces of metals). This also allows the fairwater to be provided into optimal hydrodynamic shapes. Optimal hydrodynamic shape of the fairwater may be a shape such that the turbulent flow around the fairwater is reduced (i.e., reducing the number of Reynolds Re around the fairwater). As a result, drag may be reduced.

3D additive manufacturing processes allow a high spatial control and the implementation of fairwater designs that are not possible with conventional methods e.g., welding. The 3D additive manufacturing processes allow obtaining the configured fairwater and setting up the desired difference in density between the two regions of each body with a desired shape.

Fig. 2 schematically shows a block diagram of an example method 102 for providing a fairwater, illustrating features of the present disclosure. In fig. 2 the difference in density of different regions of each body is implemented by including enclosed cavities arranged inside at least one of the two or more bodies of the fairwater. In examples, the outer shape of the two or more bodies may be the same.

In the example of fig. 2, the method 102 for providing the fairwater comprises at block 112 configuring two or more bodies of the fairwater such that at least one of the two or more bodies has an inner wall and an outer wall, the inner wall defining an enclosed cavity arranged inside the body. As in fig. 1, each body comprises a first region and a second region in which a density of the first region is higher than a density of the second region: for example, a region may have an enclosed cavity and another region may be made without an enclosed cavity, or with an enclosed cavity of different shape and/or volume.

For example, when the first region and the second region of the body are made of the same material, the absence of the enclosed cavity within the first region of the body and the presence of the enclosed cavity within the second body causes that the density of the first region is higher than the density of the second region.

At block 120, the two or more bodies of the fairwater, of which at least one of the two or more bodies comprises the enclosed cavity, are 3D-printed. 3D printing may be carried out by the 3D additive manufacturing processes and 3D printers as aforementioned in the description of fig. 1. 3D printing allows implementing complex building instructions, and it is also possible to fill the enclosed cavity during 3D printing with a material different from the build material of the body, e.g. a heavier or a lighter material.

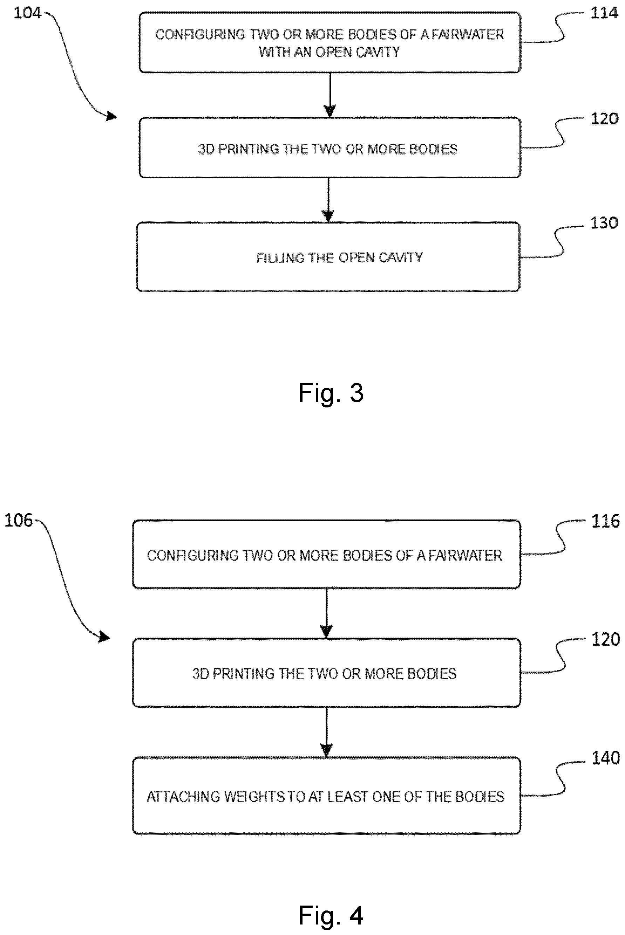

Fig. 3 schematically shows a block diagram of a method 104 for providing a fairwater, to illustrate features of the present disclosure.

In the example of fig. 3, the method 104 for providing the fairwater comprises, at block 114, configuring two or more bodies of the fairwater such that at least one of the two or more bodies comprises an open cavity, for example in the second region; a density of the first region is therefore higher than a density of the second region, as long as the open cavity remains empty.

An open cavity is a cavity arranged inside the body, much like an enclosed cavity, but is in fluid communication with the outside of the body, i.e., with any surrounding environment of the fairwater such as water, gas, liquid, etc., through a relatively small opening or channel, i.e., an opening or channel having a smaller size compared with the size of the enclosed cavity.

In some examples, a first body of the fairwater may comprise an open cavity, whereas a second body of the fairwater may comprise no cavities. In other examples, the two or more bodies may have the same open cavities, and may also have the same outer shape.

At block 120, the two or more bodies of the fairwater, of which at least one of the two or more bodies comprises an open cavity, are 3D-printed.

At block 130, the method 104 may further comprise loading an open cavity of at least one of the bodies with a load, e.g. with water, such that the density of the region containing the cavity is modified.

Optionally, the method may include a further step (not shown) of closing the cavity with a closure element to prevent the load from being spilled, e.g. during handling, transport, and/or mounting. An open cavity may also simply become filled with water when the body is submerged in water. Once a cavity is filled with a load, the mass distribution of the body changes: depending on the density of the load, and on the size and position of the cavity, the region of the cavity may become the region with a higher density.

As an alternative to providing open or enclosed cavities, or in addition to providing cavities, in some of the above example methods the first region of each body may comprise a first material and the second region of each body may comprise a second material that is different from the first material, to adjust or to further adjust the mass distribution of the body.

Fig. 4 schematically shows a block diagram of a further method 106 for providing a fairwater. In the method example of Fig. 4 it is foreseen to configure at least two bodies of the fairwater at block 116, and 3D printing the at least two bodies at block 120.

After 3D printing is completed, the method may foresee, at block 140, selectively attaching weights to at least one of the bodies, to alter the density of at least one region, and therefore the mass distribution of the body, after 3D printing. The bodies of the fairwater may then be mounted on a marine vessel.

In the case of example method 106, the bodies may optionally be configured with an attachment fixture to easily and safely attach weights to the bodies, e.g. by threading, riveting, welding, press fit or others; and/or may have an area with a suitable shape, e.g. forming seats or recesses, to receive matching-shaped weights. Example methods may thus comprise an intermediate step (not shown) between steps 120 and 140, for providing a weight attachment fixture on at least one body.

Other example methods, not shown in the figures, may combine steps of method 106 of Fig. 4 with other example method disclosed herein, such as methods 100, 102 or 104. In other words, weights may be selectively attached to one or more of the bodies configured as in methods disclosed herein, after 3D printing the bodies and before mounting the fairwater on a marine vessel. For example, weights may be used to configure the mass distribution of the bodies such that they adopt the desired mounting orientations, but may also be used to slightly adjust the mass distributions shortly before use: for example, shortly before the fairwater is mounted on a marine vessel, and depending on the sea water conditions, mounting depth, or other.

Example methods 100, 102, 104, 106 allow implementing a difference in density between two regions of each body of the fairwater. By setting up a difference in density between the two regions of each body, the mass distribution of each body may be adjusted. Configuring the mass distribution of each of the fairwater bodies allows causing that each body adopts a predetermined orientation when placed in sea water, thereby facilitating their handling and assembly.

Fairwaters according to the present disclosure may be provided by any of the methods disclosed herein.

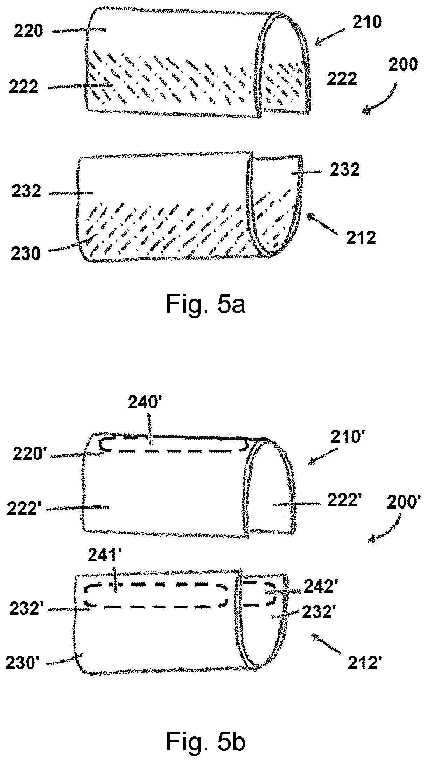

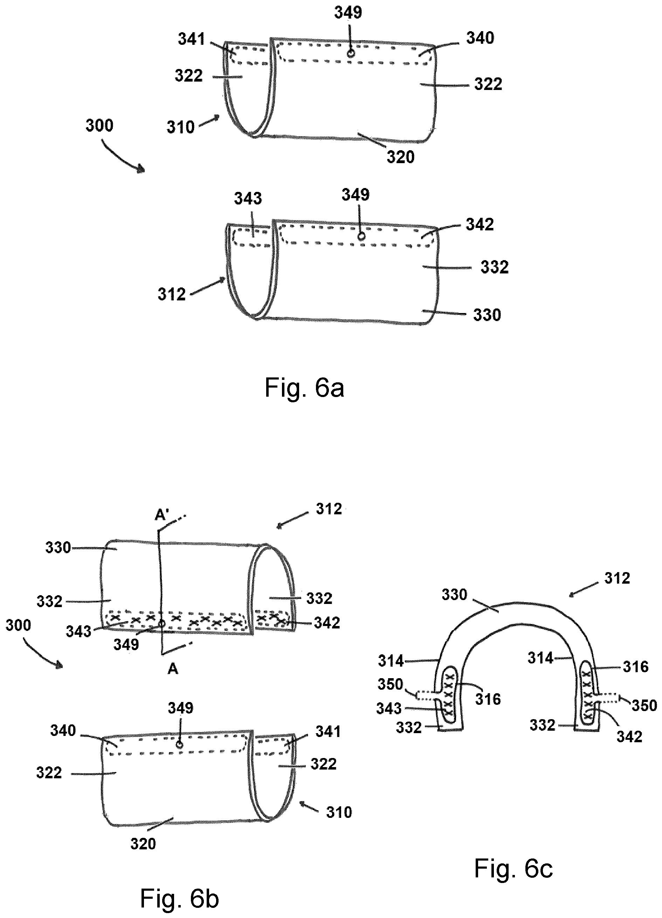

Fig. 5 and fig. 6 (including figs. 5a, 5b, 6a, 6b, 6c) schematically represent example fairwaters 200, 300 to illustrate features of the present disclosure. In each of Figs. 5 and 6, the fairwater comprises two 3D-printed bodies 210, 212 and 310, 312. In other examples, the fairwater may comprise more than two bodies. In other examples, the fairwater may comprise a single body, e.g. a body with two relatively symmetrical parts and a hinge part joining them.

The external shape of bodies 210, 212 and 310, 312 of fairwaters 200 and 300 in figs. 5 and 6 is substantially the same and comprises a generally channel shape, i.e. with a generally U-shaped cross section, with a central web region and with a leg region encompassing the two walls or legs on either side of the web region.

In practice, the outer shape of the bodies is configured according to the function of the fairwater, and to allow the two bodies to be assembled to each other and around the propeller shaft and bearing. In other examples, the two or more bodies forming a fairwater may have different external shapes. For example, the bodies of fairwaters as disclosed herein may each have a semi-frustoconical shape, to form a fairwater that is at least partly frustoconical, rather than cylindrical as schematically depicted in the figures.

In the examples of fig. 5 and in fig. 6 each body may be configured such that the density of the body in the web region is different from the density of the body in the leg region. The mass distribution resulting from this difference in density between the two regions of a body causes each body to adopt a predetermined orientation when placed in sea water.

In the example of fig. 5a, each of the two bodies 210 and 212 is 3D-printed as a solid part, either using different build materials for different regions or using a common build material with different density, e.g. different porosity, in different regions. In the figure, parts with a higher density of build material are shown by dash - dotted lines, while parts of lower density are shown white.

In fig. 5a the bodies 210 and 212 have the same overall external shape but are not configured and 3D-printed with the same densities in the same regions:

therefore, the two bodies have different mass distributions. In one example, body 210 is configured with a web region 220 of lower density and a leg region 222 of higher density, and body 212, on the contrary, is configured with a web region 220 of higher density and a leg region 222 of lower density.

Since the two bodies 210 and 212 have different mass distributions, when they are placed in sea water they will adopt different orientations: as shown in the figure, body 210 will tend to float with its higher density leg region 222 at the bottom, while body 212 will tend to float in the opposite orientation, with its higher density web region 230 at the bottom.

It will be understood that by further adjusting the mass distribution within the bodies (e.g. by a higher density towards one end of the length of the body), it is also possible to cause them to tilt a certain angle around an axis perpendicular to the drawing.

The mass distribution of each body 210, 212 may thus be configured such that the bodies 210, 212 tend to adopt orientations that bring them to face each other when they are in sea water, as shown in Fig. 5a. As a result, once the bodies 210, 212 are released into the water in the vicinity of a marine vessel they can be handled by divers, to be displaced to a target position and easily assembled around a propeller shaft.

In another example, shown in fig. 5b, the difference in density may be achieved by configuring and 3D printing the bodies of a fairwater with a single build material with substantially uniform material density and with cavities in some regions, e.g. at least one region, such that the density of the body is lower in these regions. In fig. 5b, two bodies 210' and 212' of a fairwater 200', which are identical in external shape to bodies 210 and 212 of fig. 5a, are made of a single build material of uniform material density, and configured and 3D-printed with internal, enclosed cavities, formed inside the material of the bodies during 3D printing and suitably arranged in each body such that it tends to adopt the desired orientation in water. For example, in order to adopt the orientations shown in fig. 5b, body 210' may be configured with an enclosed cavity 240' along the center of the web region 220', while body 212' may be configured with cavities 241' and 242' towards the free ends of the legs in the leg region 232'. As known, enclosed cavities may be easily formed in a body during 3D printing.

In further examples (not shown), the difference in density may be achieved by configuring and 3D printing the bodies 210 and 212 with a single build material with substantially uniform material density and with added weights or loads in some regions, e.g. weights to be attached to the body after 3D printing the bodies and before use, such that the density is higher in these regions.

In one such example, in order to make the bodies 210, 212 float in the predetermined orientations of fig. 5, the leg region 222 of body 210 may be configured to include an enclosed or attached weight, e.g. towards the free end of the legs; while web region 230 of body 212 may be configured to include an enclosed or attached weight, e.g. along the central part of the web. As known, objects such as weights may be inserted between layers of build material during 3D printing. In the case of weights to be attached to the body after 3D printing, the body may further be configured with suitable seats or attachment fixtures, to receive and securely attach a weight.

A weight is defined herein as a solid object, e.g. in the shape of a plate, a rod, a tube, a block, etc., made of a material that is heavier than the build material of the bodies of the fairwater, for example a metal or alloy such as lead, brass, stainless steel, bronze, or others. On the other hand, a load of the kind to be used to selectively fill open cavities of a body of a fairwater, is defined herein as a bulk material, such as water, sand, gravel, metal beads, or the like, such as bulk materials commonly used as ballast.

In figs. 6a, 6b, 6c another example fairwater 300 is shown, similar to fairwater 200 of fig. 5 in that it comprises two bodies 310, 312 with the same overall external shape, with body 310 comprising a web region 320 and a leg region 322, and body 312 comprising a web region 330 and a leg region 332.

Contrary to fig. 5, however, in the example of fig. 6 it is foreseen that in an initial configuration, e.g. after 3D-printing, the two bodies 310 and 312 of fairwater 300 both have the same mass distribution, for example with the same cavities, as shown: body 310 comprises cavities 340 and 341 in leg region 322, and body 312 comprises inner cavities 342 and 343 in the corresponding leg region 332. Thus, in the initial configuration in which they are 3D-printed, the two bodies are substantially identical, and there is no need to 3D-print two different bodies. This has the advantage that a smaller number of bodies needs to be transported and stored, as each body may serve as upper/lower body or right/left body of the fairwater. For example, only one body needs to be stored in a marine vessel, instead of two, to allow repairing the fairwater in case of damage to one of the bodies caused by an impact.

However, as shown in fig. 6a, the bodies 310, 312 in their initial configuration after 3D-printing, if placed in sea water, would tend to adopt the same orientation, in both cases with the denser web portions 320, 330 at the bottom: this means that in order to mount the fairwater around the propeller shaft of a marine vessel, one of the bodies would need to be rotated once they are in the water, forced into an unstable orientation, and maintained in this orientation during assembly.

In order to benefit from a reduction in the number of bodies to be stored, and still retain the advantage of facilitating the operation of mounting the fairwater to the marine vessel, or replacing one of the bodies of the fairwater, while the vessel is at sea, the two bodies 310 and 312 may be configured to adopt a final configuration before use, such that in this final configuration the mass distribution of body 310 and the mass distribution of body 312 are different.

For example, cavities 340, 341, 342, 343 may be configured as open cavities, with an opening 349 in fluid communication with the outside of the body 310 or 312, i.e., with any surrounding environment such as air or water. Only the openings 349 of cavities 340 and 342 are visible in fig. 6a. Openings 349 allow each cavity 340, 341, 342, 343 to be selectively filled with a load at any time after 3D printing and before use.

As a result, in a final configuration of use, the bodies 310 and 312 of fairwater 300 may be provided with different mass distributions, simply by filling only some of the cavities 340, 341, 342, 343 with a load, while others are left empty. Each opening 349 may have a corresponding closure element 350 (see fig. 6c) to isolate the corresponding cavity from the environment and prevent the load from flowing out.

Fig. 6b and fig. 6c, wherein fig. 6c is a cross section along the plane AA' of fig. 6b, show an example of a final configuration of the fairwater 300: in this example, the cavities 342 and 343 of the 3D-printed body 312 have been filled with a load, for example sea water, while the cavities 340 and 341 of the 3D-printed body 310 have been left empty. The load or filling is represented with crosses in figs. 6b and 6c.

As shown in fig. 6b and fig. 6c, as a result of the selective filling with a load of the cavities 342 and 343 of the 3D-printed body 312, in the final configuration the body 312 tends to adopt the opposite orientation from that of the body 310 when placed in sea water, such that the two bodies 310 and 312 adopt different and matching mounting orientations, and may be easily handled underwater and assembled on the marine vessel.

In examples, if open cavities such as 342, 343 of body 312 are to be filled with sea water, they may be configured such that the sea water may enter through the openings 349 and fill the cavities once the body is placed in the water in the vicinity of the marine vessel. Thus, at the time of releasing the fairwater bodies in the sea to be assembled on a marine vessel, and depending on the orientation desired for each body, the cavities of each body may be selectively left open so they fill with water once the bodies are submerged, or closed with a closure element before they are released in the sea, so they remain empty.

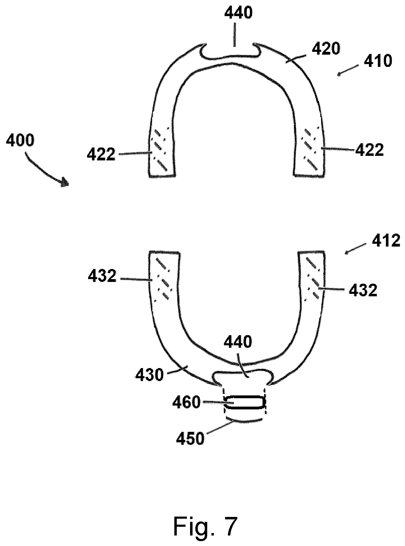

Fig. 7 shows in cross-section a first body 410 and a second body 412 of a fairwater 400 according to another example of the present disclosure. Bodies 410 and 412 may have a general external shape similar to that of the bodies shown in figs. 5 and 6.

In the example of Fig. 7 the two bodies 410 and 412 of fairwater 400 are 3D-printed with the same general external shape and with the same mass distribution: each of the bodies 410 and 412 comprises a web region of lower density, respectively 420 and 430, and a leg region of higher density, respectively 422 and 432, such that both bodies 410 and 412, as 3D-printed, tend to become oriented as shown for body 410 on the left of fig. 7, when placed in sea water.

Furthermore, each body 410, 412 may comprise a seat or recess 440, e.g. a channel-shaped recess formed along at least part of the web region 420 and 430.

As shown on the right of fig. 7, after 3D printing the two bodies and before the fairwater 400 is assembled at a target on a marine vessel, a weight 460 may be arranged in the recess 440 of body 412 and held in place therein, e.g. with a suitable closure element 450. The presence of the weight 460 in the recess 440 of body 412 causes a change in the final configuration of this body, and in particular in its mass distribution, which are different from the initial configuration and mass distribution of body 412, as 3D-printed. For example, as shown on the right of fig. 7, the web region 430 of body 412 may now have a higher density than its leg region 432, such that the body 412, when placed in water, tends to adopt the illustrated orientation, that is different from the orientation of body 410. The final configuration of body 410 in fig. 7 may be the same as its initial configuration, as 3D-printed.

It will be understood that, in other examples, the weight 460 may be attached to a suitable surface of the body without the presence of a dedicated seat or recess, by using fasteners such as screws, or with suitable attachment fixtures provided on the body during or after 3D printing.

In other examples, foreseen in the present disclosure but not illustrated in detail, one body of a fairwater may comprise no cavities, or may comprise a cavity with a different shape, volume, and / or position from those of another body of the fairwater; each body may also comprise multiple cavities, to be selectively loaded after 3D printing and before use, depending on the final configuration and mass distribution desired for each body.

Similarly, one or several bodies of a fairwater may be configured with regions of different densities and corresponding mass distributions by combining several described solutions, i.e. different materials or different material densities, and/or enclosed cavities, and/or open cavities with or without a load, and/or weights.

In the examples illustrated and described herein, the fairwater is configured with bodies that adopt orientations bringing them face to face to be assembled vertically, i.e. an "upper body" 312 and a "lower body" 310. Alternatively, the bodies of fairwaters according to the present disclosure may be configured to adopt different predetermined orientations to be assembled: for example, bodies 310, 312 of fairwater 300 may be configured as a "right-side body" and a "left-side body", to be assembled facing each other horizontally. In this case, each body 310, 312 could be configured with a first region formed by a half body including one of the legs of the U-shaped cross section, and a second region formed by a half body including the other leg of the U-shaped cross section: the first and second regions of each body would then be configured with different densities to adopt suitable orientations, e.g. by loading the open cavity 340 of body 310 and the open cavity 342 of body 312 while leaving cavities 341 and 343 empty. Other orientations for assembly, and the corresponding differences in densities and mass distributions of the bodies to achieve these orientations, are also possible. Furthermore, each body may be configured with more than two regions with different densities, to cause the bodies to adopt, when placed in water, predetermined orientations in two directions in space, e.g. with respect to two horizontal Cartesian coordinate axes.

For a body of an underwater element having a certain external shape and, and knowing the predetermined mounting orientation that is desired for the body, there are several techniques to determine the mass distribution of the body that is suitable for achieving that the center of buoyancy and the center of gravity be vertically aligned when the body is in the desired orientation: e.g. mathematical modelling using computer-implemented methods, such as finite elements method (FEM).

In some examples, it is foreseen that each body of a fairwater may additionally be configured with a floatability that is close to neutral, with each body being configured with an external volume and with a weight such that, when the body is in sea water, a buoyant force Fb acting on the body is between 80% and 120% of a gravitational force Fg acting on the body, that is, $0.80\,Fg \leq Fb \leq 1.20\,Fg$. In some cases, each body may be configured such that $0.95\,Fg \leq Fb \leq 1.05\,Fg$.

As known, when a body is placed in water, the body is subject to a downward gravitational force Fg resulting from the weight, and also to an upward buoyant force Fb, which according to Archimedes' principle is equal to the weight of the water (in this case, sea water) displaced by the body. Depending on the balance between the two forces, that is, depending on the volume and on the weight of the body, the body tends to sink, or tends to float.

The buoyant force depends on the density of the water in which the body is floating or submerged. The density of surface sea water varies depending e.g. on temperature and salinity, ranging between about 1020 and 1029 kg/m³, with an average of about 1025 kg/m³; in the present disclosure, for the purpose of determining floatability, the density of sea water is considered to be 1025 kg/m³.

When released into the sea, the bodies of the fairwater configured with a floatability close to neutral are easily displaced both horizontally and vertically, e.g. by divers.

In some examples, each body of a fairwater may be configured with a floatability that is close to neutral but slightly positive, in order to reduce the risk that the bodies sink when they are released into sea water to be mounted on a marine vessel: for example, a buoyant force Fb acting on the body may be between 100% and 120% of a gravitational force Fg acting on the body, that is: $Fg \leq Fb \leq 1.20\,Fg$. In some examples, the bodies are configured such that the buoyant force is between 100% and 110% of the gravitational force, that is: $Fg \leq Fb \leq 1.10\,Fg$.

In examples, each fairwater body is configured with a relationship between the buoyant force Fb and the gravitational force Fg to provide a buoyancy that is relatively close to neutral: when submerged in water it will tend to slowly rise and remain at the surface, if designed with slightly positive floatability, or slowly sink, if designed with relatively negative floatability, or remain at the depth where it is placed, if designed with neutral floatability. The floatability is also configured for each particular fairwater body such that the force a diver needs to exert on the body for taking it from the water surface to the assembly position on the hull is within a diver's physical abilities: a diver should need to exert less than 20 kg, and preferably less than 10 kg, usually downwards (when the floatability is slightly positive), or possibly upwards (if the floatability is slightly negative).

For example, a fairwater body having a weight and gravitational force Fg of 100 kg may be configured to have a buoyant force Fb of 108 kg (108% of Fg), such that a single diver may handle the fairwater body by pulling it downwards in the water with a force of 8 kg. A heavier fairwater body, for example having a weight and gravitational force Fg of 400 kg, may be configured to have e.g. a buoyant force Fb of 412 kg (103% of Fg), to be handled by a single diver exerting a force of 12 kg, or it may be configured to have e.g. a buoyant force Fb of 420 kg (105% of Fg), to be handled by two divers each exerting a force of 10 Kg; many other configurations are possible. In practice, when configuring a specific fairwater body, the weight of the fairwater body as well as the number of divers foreseen to be involved in the handling of the fairwater body under water may be taken into account.

In examples of a fairwater as disclosed and claimed herein, each body may have a semi-frustoconical shape for reducing the drag of the marine vessel when the fairwater is mounted on a propeller shaft of the marine vessel.

Furthermore, the bodies of example fairwaters as disclosed herein may comprise matching guiding features (such as a conical pin and an opening, or others) to facilitate assembly of the bodies to each other.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

**Claims**

1. Method for providing a fairwater, the method comprising:

configuring the fairwater so that the fairwater comprises one or more bodies, at least one body comprising a first region and a second region, wherein a density of the first region is higher than a density of the second region, the difference in density being implemented by:

> • a body comprising one material, with a first density of the material in the first region of the body being different from a second density of the material in the second region of the body; or
> • the first region of a body comprising a first material and the second region of the body comprising a second material that is different from the first material; or
> • a body comprising at least a cavity arranged inside the body; or
> • a body comprising at least a weight; or
> • combinations thereof; and

3D printing the one or more bodies of the fairwater.

2. Method according to claim 1, wherein build materials for 3D printing the one or more bodies of the fairwater are selected from the following: polymers, composition of cements, metals, metals alloys, or combinations thereof.

3. Method according to any of claims 1 or 2, comprising configuring the fairwater with two bodies with the same external shape and such that the density of one region of one of the bodies is different from the density of the same region of the other body.

4. Method according to any of claims 1 to 3, further comprising, after 3D printing the one or more bodies, modifying the density of at least one region of at least one 3D-printed body such that the density of the first region is higher than the density of the second region.

5. Method according to any of claims 1 to 4, comprising configuring at least one body of the fairwater with an inner wall and an outer wall, the inner wall defining an enclosed cavity.

6. Method according to any of claims 1 to 5, comprising configuring at least one body of the fairwater with an open cavity, the open cavity being in fluid communication with the outside of the body.

7. Method according to claim 6, the method comprising, after 3D printing the one or more bodies, filling the open cavity of at least one body with a load, for example water.

8. Method according to any of claims 1 to 7, the method comprising, after 3D printing the one or more bodies, attaching a weight to at least one body.

9. Fairwater of a marine vessel, the fairwater comprising:
   one or more 3D-printed bodies, at least one body comprising a first region and a second region, wherein a density of the first region is higher than a density of the second region, the difference in density being implemented by:

   > • a body comprising one material, with a first density of the material in the first region of the body being different from a second density of the material in the second region of the body; or
   > • the first region of a body comprising a first material and the second region of the body comprising a second material that is different from the first material; or
   > • a body comprising at least a cavity arranged inside the body; or
   > • a body comprising at least a weight; or
   > • combinations thereof.

10. Fairwater according to claim 9, wherein at least one of the one or more bodies comprises an enclosed cavity.

11. Fairwater according to any of claims 9 or 10, wherein at least one of the one or more bodies comprises an open cavity, wherein the open cavity is in fluid communication with the outside of the body.

12. Fairwater according to claim 11, further comprising closure elements for closing the open cavities.

13. Fairwater according to any of claims 9 to 12, the fairwater comprising two bodies, wherein the two bodies as 3D-printed are identical.

14. Fairwater according to any of claims 9 to 13, wherein the fairwater comprises two bodies and each of the bodies has a semi-frustoconical shape.

15. Fairwater according to any of claims 9 to 14, wherein the fairwater comprises two or more bodies and the two or more bodies comprise matching guiding features to facilitate assembly of the bodies to each other.

100

| CONFIGURING TWO OR MORE BODIES OF A FAIRWATER | 110 |

↓

| 3D PRINTING THE TWO OR MORE BODIES | 120 |

Fig. 1

102

| CONFIGURING TWO OR MORE BODIES OF A FAIRWATER WITH AN ENCLOSED CAVITY | 112 |

↓

| 3D PRINTING THE TWO OR MORE BODIES | 120 |

Fig. 2

104

| CONFIGURING TWO OR MORE BODIES OF A FAIRWATER WITH AN OPEN CAVITY | 114 |

↓

| 3D PRINTING THE TWO OR MORE BODIES | 120 |

↓

| FILLING THE OPEN CAVITY | 130 |

## Fig. 3

106

| CONFIGURING TWO OR MORE BODIES OF A FAIRWATER | 116 |

↓

| 3D PRINTING THE TWO OR MORE BODIES | 120 |

↓

| ATTACHING WEIGHTS TO AT LEAST ONE OF THE BODIES | 140 |

## Fig. 4

Fig. 5a

Fig. 5b

Fig. 6a

Fig. 6b

Fig. 6c

Fig. 7

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/096191 A1 (HASHOLT STEEN [DK]) 6 April 2017 (2017-04-06) * figures 2-5c * * paragraphs [0025], [0027] * * claims 5, 7 * | 1-15 | INV. B63B3/02 B22F10/00 B33Y10/00 B33Y80/00 B63B73/20 |
| X | US 5 656 376 A (RAFFERTY GARY MICHAEL [US] ET AL) 12 August 1997 (1997-08-12) * figures 3, 4, 11-15 * | 1-15 | B63B73/30 B63B73/50 B63B73/60 B63B81/00 |
| X | GB 228 343 A (NICHOLAS WLADIMIR AKIMOFF) 5 February 1925 (1925-02-05) * figures 1-12 * | 1-15 | |
| X | GB 417 186 A (HENRY NORMAN SWALES) 1 October 1934 (1934-10-01) * figures 1, 2, 6 * | 1-15 | |
| A | US 2020/108893 A1 (NOAH ADAM JON [US]) 9 April 2020 (2020-04-09) * figures 1-5 * * paragraph [0005] * | 1-15 | |
| A | US 2024/017479 A1 (BELVISI FRANCESCO [IT] ET AL) 18 January 2024 (2024-01-18) * figures 1, 4-7 * * paragraph [0010] * | 1-15 | TECHNICAL FIELDS SEARCHED (IPC) B63B C22C B33Y B22F |

The present search report has been drawn up for all claims

| Place of search | Date of completion of the search | Examiner |
|---|---|---|
| The Hague | 28 August 2024 | Freire Gomez, Jon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 24 38 2247

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | | Publication date |
|---|---|---|---|---|
| US 2017096191 A1 | 06-04-2017 | CN | 107021183 A | 08-08-2017 |
| | | DK | 3150481 T3 | 07-10-2019 |
| | | EP | 3150481 A1 | 05-04-2017 |
| | | US | 2017096191 A1 | 06-04-2017 |
| US 5656376 A | 12-08-1997 | AU | 1634992 A | 04-02-1993 |
| | | BR | 9202952 A | 30-03-1993 |
| | | DE | 69214065 T2 | 03-04-1997 |
| | | EP | 0528219 A2 | 24-02-1993 |
| | | EP | 0710544 A2 | 08-05-1996 |
| | | ES | 2094856 T3 | 01-02-1997 |
| | | KR | 930004149 A | 22-03-1993 |
| | | US | 5292270 A | 08-03-1994 |
| | | US | 5540173 A | 30-07-1996 |
| | | US | 5582528 A | 10-12-1996 |
| | | US | 5656376 A | 12-08-1997 |
| GB 228343 A | 05-02-1925 | NONE | | |
| GB 417186 A | 01-10-1934 | NONE | | |
| US 2020108893 A1 | 09-04-2020 | NONE | | |
| US 2024017479 A1 | 18-01-2024 | EP | 4221957 A1 | 09-08-2023 |
| | | US | 2024017479 A1 | 18-01-2024 |
| | | WO | 2022070121 A1 | 07-04-2022 |

EPO FORM P0459

For more details about this annex : see Official Journal of the European Patent Office, No. 12/82